# FASCICULE DE BREVET EUROPEEN

(11) **EP 2 093 544 B1**
(45) Date de publication et mention de la délivrance du brevet: **07.03.2012**
(21) Numéro de dépôt: 09151910.8
(22) Date de dépôt: 03.02.2009
(51) Int. Cl.: G01D 11/28

(54) **Tableau de bord de vehicule a jonc peripherique**
Armaturenbrett eines Fahrzeugs mit umlaufendem Ring
Vehicle dashboard with peripheral trim

(30) Priorité: 19.02.2008 FR 0851041
(43) Date de publication de la demande: 26.08.2009
(73) Titulaire: MAGNETI MARELLI FRANCE, 78190 Trappes (FR)
(72) Inventeur: Verdy, Alain, 77200, Torcy (FR)
(74) Mandataire: Branger, Jean-Yves

(56) Documents cités:
- EP-A1- 1 470 946
- FR-A- 2 703 148
- US-B1- 6 490 776

## Description

La présente invention est relative à un tableau de bord pour véhicule automobile.

Plus précisément, la présente invention concerne les moyens d'éclairage d'un tel tableau de bord.

De nombreux tableaux de bord équipant les véhicules automobiles actuels comprennent, en plus des indicateurs à aiguille et cadrans bien courants, un jonc périphérique qui entoure le cadran.

Par l'expression "jonc périphérique", on entend un cerclage qui entoure complètement ou partiellement un cadran, qui affleure à la surface de ce cadran ou fait saillie vers le haut par rapport à lui et qui permet de bien individualiser et de limiter visuellement le cadran par rapport à son entourage immédiat, à savoir le reste du tableau de bord.

Ce jonc périphérique est le plus souvent courbe, et matérialise un cercle ou une portion de cercle. Cependant, un tel jonc peut présenter d'autres formes.

On a proposé des tableaux de bord de ce genre dont le jonc périphérique est prévu transparent ou translucide et qui est adapté pour être lumineux, lorsque l'éclairage du véhicule est mis en marche.

De plus, le tableau de bord intègre très souvent des indicateurs à affichage digital, par exemple pour renseigner le conducteur sur le kilométrage total du véhicule et sur la dernière distance parcourue. Un bouton de réinitialisation, de type poussoir, est prévu pour remettre à zéro cette dernière indication.

Alors que les indicateurs sont placés dans l'espace délimité par le jonc périphérique, le bouton est le plus souvent placé à l'extérieur de cette zone.

On décrit dans le document US-A-6 490 776 une plaque de tableau de bord "monopièce", dans laquelle différents cadrans sont rattachés à un support périphérique par des pattes formant charnière.

Le document FR-A-2 703 148 se rapporte à une structure de tableau de bord à guide lumineux.

La présente invention a pour but de perfectionner ce type de tableau de bord en proposant une structure qui permet un éclairage uniforme du cadran, de l'indicateur à aiguille du bouton et du jonc, avec une économie de moyen d'éclairage.

La présente invention concerne donc un tableau de bord pour véhicule automobile comprenant au moins :
- un indicateur à aiguille ;
- un cadran associé comportant des plages, indicatrices de valeurs de référence et/ou de symboles, qui est bordé par un jonc périphérique ;
- un bouton poussoir de réinitialisation d'un indicateur supplémentaire associé audit cadran,
- des moyens d'éclairage par l'arrière,
- les indicateur, plages, jonc et bouton poussoir étant translucides ou transparents.

Selon l'invention, ce tableau de bord comporte une même source lumineuse d'éclairage des indicateurs, plages, jonc et bouton poussoir et le jonc constitue le rebord périphérique d'un premier guide optique de transmission de la lumière de la source d'éclairage.

Selon d'autres caractéristiques avantageuses et non limitatives, de ce tableau de bord :
- le cadran est en appui contre le guide optique, dans l'espace délimité par le jonc ;
- il comprend un second guide optique de transmission de la lumière de la source d'éclairage au bouton poussoir ;
- l'indicateur à aiguille comporte un moyeu formant axe de rotation, la source lumineuse étant située en arrière de ce moyeu ;
- la source lumineuse est constituée d'au moins une diode électroluminescente ;
- le guide optique présente une ouverture débouchante pour le passage du moyeu de l'indicateur, qui est conformée pour "capter" une partie de la lumière émise par la source lumineuse et la transmettre en direction du jonc ;
- le bord du second guide optique le plus proche de la source lumineuse est décalé latéralement par rapport à l'ouverture débouchante du premier guide optique, de manière à ce que la lumière provenant de la source soit captée en partie par le premier guide, mais également par le second.

D'autres caractéristiques, buts et avantages de la présente invention apparaîtront à la lecture de la description détaillée qui va suivre d'un exemple de réalisation non limitatif. Cette description sera donnée en référence aux dessins annexés dans lesquels :
- la figure 1 est une vue de face d'un cadran de tableau de bord conforme à l'invention ;
- la figure 2 est une vue en coupe partielle d'un tableau de bord également conforme à la présente invention.

Le tableau de bord des figures annexées comprend un boîtier muni à sa partie arrière d'un circuit imprimé 10 et à sa partie avant d'un cadran 4 associé à un indicateur à aiguille 2.

Le boîtier peut faire l'objet de nombreux modes de réalisation. Il est formé de préférence par moulage en matière plastique opaque, par exemple de couleur noire.

On a référencé 11 les différentes parties de ce boîtier, qui s'intercalent entre le circuit imprimé et le cadran 4.

Le circuit imprimé porte une source lumineuse constituée, dans l'exemple illustré ici, d'un couple de diodes électroluminescentes 100.

Il comporte également une diode supplémentaire 101 dont on expliquera plus loin la fonction particulière.

Enfin, le circuit imprimé porte un contact 102, de type métallique, dont on expliquera également plus loin la fonction.

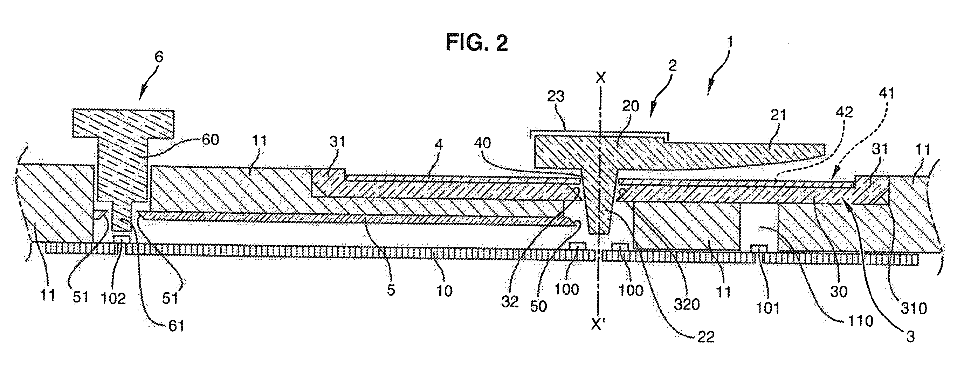

Comme le montre particulièrement la figure 2, les éléments 11 du boîtier servent de support un guide optique 3 qui a la forme d'un disque et dont la périphérie, formée en saillie vers le haut, constitue un jonc circulaire 31 qui délimite le cadran 4 du tableau de bord.

Ce guide, par exemple en matière plastique, est transparent ou au moins translucide.

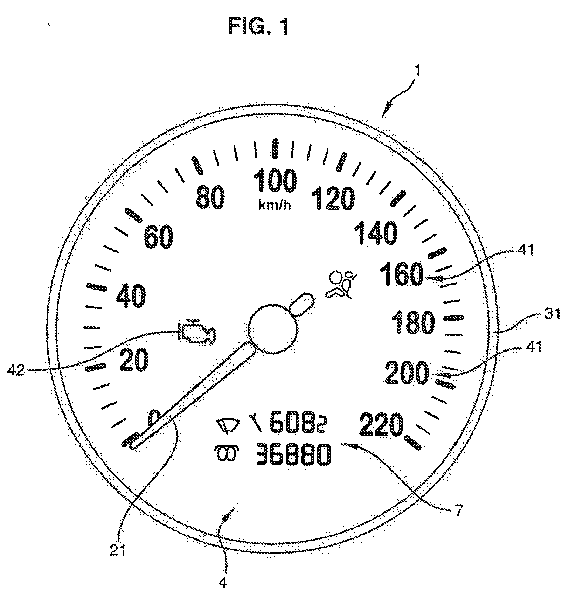

Le cadran 4 est en appui contre la face visible du disque 3. Ainsi que cela apparaît plus particulièrement à la figure 1, le cadran 4 porte des plages 41 indicatrices de valeurs de référence et/ou de symboles. En l'occurrence, dans le cas des figures représentées, il s'agit d'indications de vitesse du véhicule.

La référence 42 désigne une icône représentative d'un équipement du véhicule, dont le bon et/ou le mauvais fonctionnement s'affiche également sur le cadran, par illumination de cette icône.

Par ailleurs, on a référencé 7 des indications kilométriques qui renseignent le conducteur notamment sur la dernière distance parcourue au volant de son véhicule.

Le guide optique 3 présente une ouverture centrale chanfreinée débouchante 32, le chanfrein étant référencé 320.

Il en est de même bien entendu pour le cadran 4 dont l'ouverture centrale est référencée 40.

Dans ces ouvertures est engagé le moyeu 22 de l'indicateur à aiguille 2, dont le corps est référencé 21. Le moyeu peut se mouvoir en rotation autour de l'axe X-X' des ouvertures 32 et 40.

Pour des impératifs de clarté de la figure, le moteur d'entraînement de cet indicateur n'a pas été représenté.

Cet indicateur est réalisé dans une matière plastique translucide ou transparente et un cache 23, par exemple en un matériau opaque, cache la partie centrale de l'indicateur, à l'exception du corps 21.

En dehors du cadran 4, le tableau de bord comprend un bouton poussoir 6 qui est par exemple destiné à la réinitialisation des informations 7 précitées.

Ce bouton est également constitué d'une matière translucide ou transparente et son corps 60 est prévu pour coulisser à l'intérieur du tableau de bord quand on appuie dessus.

Son extrémité libre est constituée d'un téton 61 qui peut sélectivement venir en appui contre le contact métallique 102 dont il a été fait état plus haut.

On notera que le tableau de bord comprend un second guide optique 5 qui s'étend parallèlement au premier guide 3, et en dessous de celui-ci. Ils sont séparés l'un de l'autre par un élément opaque 11. Ce second guide s'étend entre les diodes électroluminescentes 100 et le bouton poussoir 6.

Ses extrémités opposées présentent des pans coupés 50 et 51, ce dernier entourant le téton d'extrémité 61, pour une meilleure homogénéité d'éclairage de la face avant du bouton 6.

On notera par ailleurs que le pan 50 de ce second guide optiques est légèrement en retrait, par rapport au pan coupé correspondant 320 du premier guide, relativement au moyeu 22 de l'indicateur 2.

La diode précitée 101 est disposée à la verticale de l'icône 42 précitée et un puits 110 est réalisé dans les éléments 11 de manière à ce qu'aucune matière ne se situe entre la diode et la partie correspondante du guide optique.

Le fonctionnement de ce tableau de bord est le suivant.

Lorsque les diodes 100 sont en fonctionnement, une partie de la lumière est transmise à l'indicateur à aiguille 2 et celle-ci se propage jusque dans le corps 21.

Une partie de la lumière restante est captée par le second guide 5, via le pan coupé 50 et transmise jusqu'à son extrémité opposée, puis reprise par le bouton poussoir 6.

Puisque ce pan coupé 50 est légèrement en retrait par rapport à celui 320 du guide 3, la lumière est également captée par ce guide 3 et transmise jusqu'au jonc périphérique 31. Le fait qu'il soit d'une pièce avec le guide 3 contribue à lui conférer un excellent éclairage. Une partie de la lumière transmise est également captée par les plages indicatrices des valeurs de référence 41.

Il apparaît donc qu'avec une source unique de lumière, il est possible d'éclairer de manière tout à fait convenable plusieurs équipements du tableau de bord.

Bien entendu, le jonc 31 peut avoir une couleur différente de celle de l'indicateur à aiguille 2, soit par l'utilisation d'un matériau coloré, soit par le dépôt d'une encre ou d'un film coloré sur celui-ci.

## Revendications

1. Tableau de bord (1) pour véhicule automobile comprenant au moins :
- un indicateur à aiguille (2) ;
- un cadran associé (4) comportant des plages (41) indicatrices de valeurs de référence et/ou de symboles, qui est bordé par un jonc périphérique (31) ;
- un bouton poussoir (6) de réinitialisation d'un indicateur supplémentaire (42) associé audit cadran (4),
- des moyens d'éclairage (100 ; 101) par l'arrière,
- les indicateur (2), plages (41), jonc (31) et bouton poussoir (6) étant translucides ou transparents,
**caractérisé par le fait qu'**il comporte une même source lumineuse (100) d'éclairage des indicateur (2), plages (41), jonc (31) et bouton poussoir (6), et que le jonc (31) constitue le rebord périphérique d'un premier guide optique (3) de transmission de la lumière de la source d'éclairage (100).

2. Tableau de bord selon la revendication 1, **caractérisé par le fait que** le cadran (4) est en appui contre le guide optique (3), dans l'espace délimité par le jonc (31).

3. Tableau de bord selon la revendication 1 ou 2, **caractérisé par le fait qu'**il comprend un second guide optique (5) de transmission de la lumière de la source d'éclairage (100) au bouton poussoir (6).

4. Tableau de bord selon l'une des revendications précédentes, **caractérisé par le fait que** l'indicateur à aiguille (2) comporte un moyeu (22) formant axe de rotation, la source lumineuse (100) étant située en arrière de ce moyeu.

5. Tableau de bord selon l'une des revendications précédentes, **caractérisé par le fait que** la source lumineuse est constituée d'au moins une diode électroluminescente (100).

6. Tableau de bord selon les revendications 1 et 4 prises en combinaison, **caractérisé par le fait que** le premier guide optique (3) présente une ouverture débouchante (32) pour le passage du moyeu (22) de l'indicateur (2), qui est conformée pour "capter" une partie de la lumière émise par la source lumineuse (100) et la transmettre en direction du jonc (31).

7. Tableau de bord selon les revendications 3 et 6 prises en combinaison, **caractérisé par le fait que** le bord (50) du second guide optique (5) le plus proche de la source lumineuse (100) est décalé latéralement par rapport à l'ouverture débouchante (32) du premier guide optique (3), de manière à ce que la lumière provenant de la source soit captée en partie par le premier guide (3), mais également par le second (5).

## Claims

1. Dashboard (1) for motor vehicle comprising at least:
- a pointer (2)
- an associated dial (4) comprising scales (41) indicating reference values and/or symbols, which is surrounded by a peripheral ring (31);
- a reset button (6) for an additional indicator (42) associated with the said dial (4),
- back lighting means (100;101)
- the pointer (2), scales (41), ring (31) and push button (6) being translucent or transparent,
**characterized by** the fact that it comprises one same light source (100) for the pointer (2) the scales (41) ring (31) and push button (6), and in that the ring (31) forms the peripheral rim of a first optical guide (3) for transmitting the light of the light source (100).

2. The dashboard according to claim 1 **characterized by** the fact that the dial (4) rests against the optical guide (3) in the space delimited by the ring (31).

3. The dashboard according to claim 1 or 2, **characterized by** the fact that it comprises a second optical guide (5) for transmitting light from the light source (100) to the push button (6).

4. The dashboard according to one of the preceding claims, **characterized by** the fact that the pointer (2) comprises a hub (22) forming a rotation axis, the light source (100) being located behind this hub.

5. The dashboard according to one of the preceding claims, **characterized by** the fact that the light source is formed of at least one light emitting diode (100).

6. The dashboard according to claims 1 and 4 taken in combination, **characterized by** the fact that the first optical guide (3) has a through opening (32), for passing the hub (22) of the pointer (2), which is conformed to "capture" part of the light emitted by the light source (100) and to transmit the same in the direction of the ring (31).

7. The dashboard according to claims 3 and 6 taken in combination, **characterized by** the fact that the edge (50) of the second optical guide (5) the closest to the light source (100) is offset sideways relative to the through opening (32) of the first optical guide (3) so that the light originating from the source is partly captured by the first guide (3) but also by the second (5).

## Patentansprüche

1. Instrumententafel (1) für ein Kraftfahrzeug, wenigstens umfassend:
- eine Zeigeranzeige (2);
- eine zugeordnete Skala (4), die Anzeigebereiche (41) für Referenzwerte und/oder Symbole umfasst, die durch eine äußere Leiste (31) gesäumt ist;
- einen Druckknopf (6) zur neu Initialisierung einer zusätzlichen Anzeige (42), die der Skala (4) zugeordnet ist,
- Mittel (100; 101) zur Beleuchtung von hinten,
- wobei die Anzeige (2), die Bereiche (41), die Leiste (31) und der Druckknopf (6) lichtdurchlässig oder transparent sind,
**dadurch gekennzeichnet, dass** sie eine gemeinsame Lichtquelle (100) zur Beleuchtung der Anzeige (2), der Bereiche (41), der Leiste (31) und des Druckknopfs (6) umfasst, und dass die Leiste (31) die äußere Kante eines ersten optischen Leiters (3) zur Übertragung des Lichts von der Lichtquelle (100) bildet.

2. Instrumententafel nach Anspruch 1, **dadurch gekennzeichnet, dass** die Skala (4) gegen den optische Leiter (3) aufliegt, in dem Raum, der durch die Leiste (31) beschränkt ist.

3. Instrumententafel nach einem der Ansprüche 1 oder 2, **dadurch gekennzeichnet, dass** sie einen zweiten optische Leiter (5) zur Übertragung des Lichts von der Lichtquelle (100) zum Druckknopf (6) umfasst.

4. Instrumententafel nach einem der vorstehenden Ansprüche, **dadurch gekennzeichnet, dass** die Zeigeranzeige (2) eine Nadel (22) umfasst, die eine Rotationsachse bildet, wobei die Lichtquelle (100) hinter dieser Nadel angeordnet ist.

5. Instrumententafel nach einem der vorstehenden Ansprüche, **dadurch gekennzeichnet, dass** die Lichtquelle durch wenigstens eine elektrolumineszente Diode (100) gebildet ist.

6. Instrumententafel nach einer Kombination der Ansprüche 1 und 4, **dadurch gekennzeichnet, dass** der erste optische Leiter (3) eine sich öffnende Öffnung (32) für den Durchtritt der Nadel (22) der Anzeige (2) aufweist, die ausgestaltet ist, einen Teil des Lichts einzufangen, das durch die Lichtquelle (100) emittiert wird, und es in Richtung der Leiste zu übertragen.

7. Instrumententafel nach einer Kombination der Ansprüche 3 und 6, **dadurch gekennzeichnet, dass** die Kante (50) des zweiten optischen Leiters (5), die die nächste zu der Lichtquelle (100) ist, bezüglich der sich öffnenden Öffnung (32) des ersten optischen Leiters (3) seitlich verschoben ist, so dass das Licht, das von der Quelle stammt, zum Teil von dem ersten Leiter (3) eingefangen wird, aber gleichermaßen von dem zweiten (5).
